(19) **Europäisches Patentamt / European Patent Office / Office européen des brevets**

(11) **EP 4 476 110 B1**

(12) **FASCICULE DE BREVET EUROPEEN**

(45) Date de publication et mention de la délivrance du brevet:
**12.11.2025 Bulletin 2025/46**

(21) Numéro de dépôt: **23703264.4**

(22) Date de dépôt: **06.01.2023**

(51) Classification Internationale des Brevets (IPC):
**B60W 30/18** (2012.01)  **B60W 30/14** (2006.01)
**B60W 50/00** (2006.01)

(52) Classification Coopérative des Brevets (CPC):
**B60W 30/18109; B60W 30/146; B60W 50/0097;**
B60W 2520/10; B60W 2540/215; B60W 2555/60;
B60W 2720/103; B60W 2720/106

(86) Numéro de dépôt international:
**PCT/FR2023/050013**

(87) Numéro de publication internationale:
**WO 2023/152431 (17.08.2023 Gazette 2023/33)**

(54) **PROCÉDÉ DE DÉTERMINATION DE L'INSTANT D'ACTIVATION DE LA RÉGULATION DE LA VITESSE LONGITUDINALE D'UN VÉHICULE AUTOMOBILE**

VERFAHREN ZUR BESTIMMUNG, WANN DIE REGELUNG DER LÄNGSGESCHWINDIGKEIT EINES KRAFTFAHRZEUGS AKTIVIERT WERDEN SOLL

METHOD FOR DETERMINING WHEN TO ACTIVATE THE REGULATION OF THE LONGITUDINAL SPEED OF A MOTOR VEHICLE

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **08.02.2022 FR 2201083**

(43) Date de publication de la demande:
**18.12.2024 Bulletin 2024/51**

(73) Titulaire: **Stellantis Auto SAS**
**78300 Poissy (FR)**

(72) Inventeurs:
• **EL HANBALI, Hamza**
 **Casablanca, 20580 (MA)**
• **ET-THAQFY, Yassine**
 **Casablanca, 20620 (MA)**
• **LAHLOU, Zoubida**
 **Casablanca, 20190 (MA)**

(74) Mandataire: **ESIP**
**Stellantis Auto SAS**
**Service REIP - YT800**
**43, rue Jean Pierre Timbaud**
**78300 Poissy (FR)**

(56) Documents cités:
**EP-A2- 2 712 781      WO-A1-2016/151213**
**DE-A1- 102014 215 673**

**EP 4 476 110 B1**

**Description**

La présente invention revendique la priorité de la demande française 2201083 déposée le 08.02.2022.

La présente invention concerne de manière générale le domaine automobile, et notamment le domaine des procédés et systèmes d'aide à la conduite également désignés par systèmes ADAS (acronyme anglosaxon pour « Advanced Driver-Assistance System »).

Elle concerne plus particulièrement un procédé de détermination de l'instant d'activation de la régulation longitudinale de la vitesse d'un véhicule automobile à la suite d'une détection d'une zone à limitation de vitesse, sur le parcours dudit véhicule, devant le véhicule.

Le véhicule est également désigné par véhicule « hôte » ou encore « ego véhicule » ou simplement « ego ».

Il est connu des systèmes de régulation de vitesse adaptatifs pour véhicule automobile (connus sous l'acronyme ACC pour « Adaptive Cruise Control), conçus pour contrôler en continu la vitesse du véhicule « hôte » selon une loi de contrôle longitudinal du véhicule apte à contrôler la vitesse du véhicule « hôte » en fonction d'une consigne de vitesse demandée par le conducteur et de la présence d'un véhicule le précédant sur la même voie de circulation, appelé « véhicule cible ». Cette loi de contrôle longitudinal peut être employée dans différents scénarios. Ainsi, le véhicule « hôte » équipé d'un tel système peut moduler automatiquement sa vitesse pour garder une distance de sécurité prédéterminée avec le véhicule cible. Dès que la voie est libre devant le véhicule « hôte », son accélération augmente automatiquement pour atteindre la vitesse de consigne sélectionnée par le conducteur, et ainsi assister le conducteur dans sa tâche de conduite.

On connait également des systèmes permettant de prédire la régulation de vitesse nécessaire pour adapter la vitesse du véhicule en fonction d'une information de limitation de vitesse repérée devant le véhicule à plusieurs kilomètres du véhicule. De tels systèmes sont désignés par l'acronyme anglo-saxon A-ISA (Anticipated Intelligent Speed Adaptation) pour « adaptation anticipée automatique de la vitesse » et mettent en œuvre le limiteur de vitesse et/ou le régulateur ACC du véhicule qui exploitent des données de cartographie fournies par un système connu sous l'appellation « e-horizon » ou « horizon électronique » et qui permet au conducteur d'étendre son champ vision au-delà de ce qui est immédiatement visible pour lui. La portée d'un tel système est d'environ 2 km.

On connait de DE102014215673 un système d'assistance à la conduite dans un véhicule automobile. On connait de EP2712781 un dispositif de contrôle de la vitesse d'un véhicule.

Ainsi, le système A-ISA, à la suite de la détection d'une zone à vitesse limitée à venir, informe le conducteur de cette limitation de vitesse à venir (proposition d'acquittement) et lui demande ensuite de valider (acquitter) la nouvelle vitesse, dans un délai maximal déterminé, pour sa prise en compte effective par le régulateur de vitesse du véhicule et ce, bien avant que le véhicule arrive à hauteur du panneau indicateur de la vitesse limitée. Ceci a pour but d'amener le véhicule avec la « bonne » vitesse au moment où il arrive à hauteur du panneau de limitation de vitesse.

Aujourd'hui, l'instant de proposition d'acquittement de l'information de nouvelle vitesse fournie par le système A-ISA, à partir duquel le conducteur doit acquitter la nouvelle vitesse de consigne, est déterminé de manière empirique à partir de tests de roulage et de l'équation suivante :

$$\text{T\_Proposition} = \left(\frac{\text{Delta}_V}{a} + b\right) * \left(1 - \frac{\text{Delta}_V}{2 * V_{\text{ego}_{\text{init}}}}\right) + \text{T\_confort\_A\_ISA}$$

Avec :

$\text{Delta}_V$ : différence entre la vitesse « ego » et la vitesse du panneau

$V_{\text{ego}_{\text{init}}}$ : vitesse « ego »

a et b : constantes déterminées à partir des tests.

T\_confort\_A\_ISA : délai estimé durant lequel le conducteur doit acquitter la vitesse de consigne pour atteindre la limitation de vitesse du panneau quand le véhicule (ego) arrive à hauteur du panneau sans décélération brusque. Ce délai est estimé à 5 s. Ainsi, si le conducteur acquitte la nouvelle vitesse de consigne après les 5 s alors le véhicule ne sera à la vitesse du panneau qu'après avoir dépassé ce dernier. La loi de contrôle de régulation de vitesse du véhicule pourra par ailleurs, pour réduire la vitesse longitudinale du véhicule, imposer des décélérations et Jerks fortement perçus pour le conducteur et les autres passagers du véhicule durant le parcours, sources d'inconfort pour ces derniers. On rappelle que le Jerk est la dérivée de l'accélération (ou décélération) désigné également dans le langage courant par « à-coup ».

La présente invention a pour but de pallier ces inconvénients en proposant une solution permettant de calculer l'instant optimal pour débuter la régulation de la vitesse longitudinale avec une décélération « confortable » (sans à-coup) tout le long du parcours jusqu'au panneau de limitation de vitesse et potentiellement d'activer automatiquement la fonction A-ISA sur un type de parcours déterminé le permettant, comme par exemple, sur une autoroute.

A cet effet, la présente invention a pour premier objet un procédé de détermination de l'instant d'activation de la régulation de la vitesse longitudinale d'un véhicule automobile, à la suite de la détection d'un début de zone de limitation de vitesse se trouvant à une position déterminée devant le véhicule, sur la trajectoire dudit véhicule, ledit procédé consistant à déterminer la position du début de cette zone par rapport au véhicule et l'information de vitesse limitée de ladite zone et si la différence de vitesse entre la vitesse courante du véhicule (ego) et l'information de vitesse limitée est supérieure à un seuil déterminé, à construire plusieurs profils de décélération pour différents instants d'acquittement de la vitesse limitée entre un instant de proposition d'acquittement et un instant d'acquittement maximal déterminé, amenant la vitesse du véhicule à celle de la vitesse limitée en prenant en compte la position longitudinale, la vitesse longitudinale, l'accélération longitudinale et le Jerk longitudinal du véhicule, à identifier et retenir parmi ces profils, un profil de décélération déterminé répondant à des contraintes de confort déterminées, avec la durée de décélération la plus courte, et à partir du profil retenu, à déterminer la distance séparant les positions du véhicule entre le début et la fin de ladite durée, et à commander l'activation de la régulation de vitesse longitudinale du véhicule quand le véhicule arrive à ladite distance du début de la zone de limitation de vitesse.

Selon la présente invention, les contraintes de confort sont basées sur une valeur de décélération déterminée comprise entre des valeurs minimale et maximale admissibles déterminées et sur une valeur de Jerk déterminée comprise entre des valeurs minimale et maximale admissibles déterminées ; les valeurs de décélération et de jerk déterminées étant considérées sur une durée maximale déterminée comprise entre l'instant de proposition d'acquittement et l'instant maximal d'acquittement.

Selon la présente invention, le procédé consiste à considérer une relation linéaire entre les valeurs de décélération maximale et minimale et l'instant d'acquittement après l'instant de proposition de l'acquittement et une relation linéaire entre les valeurs de Jerk maximale et minimale et l'instant maximal d'acquittement déterminé après l'instant de proposition d'acquittement.

Selon une autre caractéristique, la relation linéaire entre les valeurs de décélération maximale et minimale et l'instant d'acquittement après l'instant de proposition de l'acquittement s'exprime par l'équation suivante :

$$\mathbf{\textit{Décélération maximale admissible}} = -\frac{1}{5} * t - \frac{1}{2}$$ , la relation linéaire entre les valeurs de Jerk maximale et minimale et l'instant d'acquittement après l'instant de proposition de l'acquittement s'exprime par l'équation

suivante : $$\mathbf{\textit{Jerk maximal admissible}} = -\frac{0,2}{5} * t - 0,6$$ .

Selon une autre caractéristique, un instant d'acquittement après la proposition d'acquittement à $t = 0$, permettant de construire les profils de décélération remplissant les contraintes de confort, est choisi à $t = 3,5$ **secondes.**

Selon une autre caractéristique, les profils de décélération sont construits à partir d'équations cinématiques de mouvement du véhicule : La position longitudinale $P(t)$ du véhicule s'exprimant sous la forme d'un polynôme du 5$^{ième}$ ordre : $P(t) = C_5 * t^5 + C_4 * t^5 + C_3 * t^3 + C_2 * t^2 + C_1 * t + C_0$ ; la vitesse longitudinale $V(t)$ s'exprimant comme la dérivée de la position longitudinale par rapport au temps $P(t)$ : $V(t) = 5 * C_5 * t^4 + 4 * C_4 * t^3 + 3 * C_3 * t^2 + 2 * C_2 * t + C_1$ ; l'accélération longitudinale $A(t)$ s'exprimant comme la dérivée de la vitesse par rapport au temps $V(t)$ : $A(t) = 20 * C_5 * t^3 + 12 * C_4 * t^2 + 9 * C_3 * t + 2 * C_2$ ; le Jerk $J(t)$ s'exprimant comme la dérivée de l'accélération par rapport au temps $A(t)$ : $J(t) = 60 * C_5 * t^2 + 24 * C_4 * t + 6 * C_3$ et dans lequel $C_0, C_1, C_2, C_3, C_4, C_5$ sont des coefficients déterminés à partir de contraintes définies au début et à la fin des durées des profils de décélération.

Selon une autre caractéristique, le procédé consiste à acquitter automatiquement la commande de régulation quand le type de voie de circulation choisi le permet.

La présente invention a pour deuxième objet, un produit programme d'ordinateur comportant des instructions qui, lorsque le programme est exécuté par un ordinateur, conduisent celui-ci à mettre en œuvre les étapes du procédé tel que décrit ci-dessus.

La présente invention à pour troisième objet, un véhicule automobile comportant un régulateur de vitesse adaptatif mettant en œuvre le procédé tel que décrit ci-dessus.

Selon une caractéristique, le véhicule comporte en outre un moyen de diffusion d'information apte à informer le conducteur du véhicule que la régulation de la vitesses longitudinale du véhicule est activée.

La présente invention a pour avantage de ne plus se baser sur une méthode empirique pour déterminer l'instant d'activation de la régulation de vitesse longitudinale du véhicule et, d'autre part, de déterminer cet instant pour assurer une décélération confortable (sans à coup). Elle a également pour avantage de déclencher automatiquement l'activation de la régulation quand le type de voie de circulation le permet.

D'autres avantages et caractéristiques pourront ressortir plus clairement de la description qui va suivre, donnée uniquement à titre d'exemple non limitatif et faite en se référant aux dessins dans lesquels :

[Fig. 1] illustre un logigramme des principales étapes du procédé selon l'invention ;
[Fig. 2] illustre une représentation graphique de la décélération maximale admissible prise en compte par le procédé selon l'invention ;
[Fig. 3] illustre une représentation graphique du Jerk maximal admissible pris en compte par le procédé selon l'invention ;

[Fig. 4] illustre une représentation graphique d'un premier scénario de construction d'un profil de décélération obtenu par le procédé selon l'invention ; et

[Fig. 5] illustre une représentation graphique d'un deuxième scénario de construction d'un profil de décélération obtenu par le procédé selon l'invention.

Le procédé selon l'invention met en œuvre une fonction de régulation de type A-ISA. Cette fonction est capable d'anticiper les limitations de vitesse affichées sur des panneaux de limitation de vitesse disposés sur le trajet du véhicule, devant le véhicule. La fonction A-ISA exploite pour cela les données cartographiques fournies par un système e-horizon pour proposer au conducteur du véhicule, une nouvelle vitesse de consigne correspondant à la vitesse limite détectée par le système e-horizon à partir de la position du panneau. Cette consigne de vitesse est ensuite délivrée au régulateur de vitesse du véhicule qui applique une loi de contrôle déterminée pour amener progressivement la vitesse du véhicule à la vitesse de consigne bien avant que le véhicule arrive à hauteur du panneau de limitation de vitesse. Le véhicule roule alors déjà avec la vitesse limite (de consigne) au moment où il arrive à hauteur du panneau.

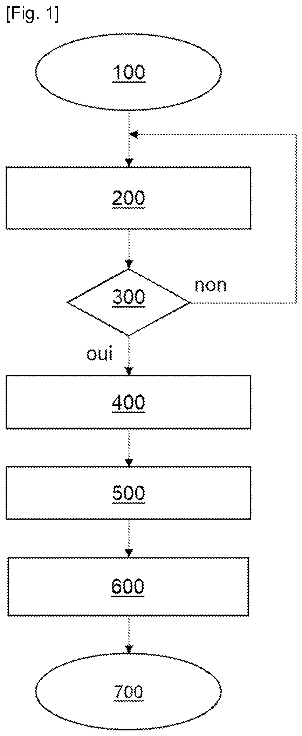

On considère ici un panneau de limitation de vitesse, mais on peut tout aussi bien considérer une zone de limitation de vitesse ou encore une information de vitesse limitée fournie par l'infrastructure routière et/ou par un autre véhicule via des moyens de communication inter véhicules et/ou entre véhicules et l'infrastructure. Les principales étapes du procédé selon l'invention sont décrites ci-après en référence au logigramme de la figure 1. Après une étape 100 de détection de panneau, le procédé consiste à filtrer les données fournies par le système e-horizon 100 (données qui sont fournies au véhicule quand ce dernier arrive approximativement à 2 Km du panneau). Tous les panneaux de limitation de vitesse ne sont pas pris en compte pour une exploitation par la fonction A-ISA.

Pour cela, le procédé selon l'invention consiste d'abord à déterminer (étape 200) la position du panneau par rapport au véhicule et l'information de vitesse limitée portée par le panneau. Les panneaux de limitation de vitesse sont ensuite classifiés, (étape 300), entre pertinents et non-pertinents de la manière suivante. Lorsqu'un panneau de limitation de vitesse est détecté à 2 Km du véhicule, la vitesse limitée affichée sur le panneau est identifiée par le système e-horizon et si la différence de vitesse entre la vitesse courante du véhicule (ego) et la vitesse limitée indiquée sur le panneau (vitesse de consigne) est supérieure à un seuil déterminé (en fonction de la vitesse courante du véhicule et du temps de calcul) , alors la vitesse limitée est prise en compte et devient la nouvelle vitesse de consigne pour le régulateur de vitesse du véhicule.

Sinon, le procédé considère que la différence de vitesse n'est pas assez importante pour activer la fonction A-ISA de régulation de vitesse longitudinale (ou régulation A-ISA).

Lorsqu'un panneau de limitation de vitesse est classifié comme pertinent, il est encore très loin (sa position est à environ 2 km du véhicule) et on ne peut donc pas proposer au conducteur d'acquitter la vitesse limitée (nouvelle vitesse de consigne de vitesse pour le régulateur) dès qu'on détecte le panneau. On introduit alors la notion de « bon » moment pour proposer au conducteur d'acquitter la nouvelle vitesse de consigne. Ce « bon » moment doit permettre au régulateur de vitesse de réduire la vitesse du véhicule de manière à l'amener à la vitesse limitée, affichée sur le panneau de limitation de vitesse, au moment où le véhicule arrivera à la hauteur du panneau en respectant certaines contraintes dites de confort.

Si le panneau est déterminé comme pertinent par le procédé, et que le véhicule roule par exemple à 100 km/h et que la vitesse limitée affichée sur le panneau est de 70 km/h (nouvelle vitesse de consigne), le procédé doit commander la décélération du véhicule pour passer d'une vitesse véhicule de 100 km/h à une vitesse véhicule de 70 km/h.

Pour cela, le procédé consiste à construire, (étape 400), des profils de décélération pour différents instants d'acquittement entre t = 0 s (instant de proposition d'acquittement) et t = 5 s (instant d'acquittement maximal) à partir de la vitesse longitudinale du véhicule Vego, l'accélération longitudinale du véhicule (ou décélération qui est l'accélération négative), la position longitudinale du véhicule et le Jerk longitudinal, à l'instant de le proposition d'acquittement t = 0 s.

Le procédé selon l'invention consiste ensuite à identifier et retenir, (étape 500), parmi l'ensemble des profils de décélération longitudinale, celui présentant la décélération qui est la plus confortable selon des critères, ou contraintes, déterminés, précisés ci-après, et avec la durée de décélération Dm la plus courte. Le procédé consiste ensuite, à partir du profil de décélération retenu, à déterminer, (étape 600), la position du véhicule à la fin du profil de décélération (fin de la durée Dm). La différence de position du véhicule entre le début et à la fin de la durée Dm donnera alors à la distance en mètres à considérer, en partant du panneau, pour déterminer l'instant à partir duquel le procédé va commander, (étape 700), l'activation de la régulation de vitesse longitudinale du véhicule jusqu'au panneau. Le procédé peut être mis en œuvre automatiquement si le type de route s'y prête. Ce peut être le cas, par exemple sur autoroute. Ainsi, si le type de route choisi est une autoroute et que le mode de régulation est sélectionné, par exemple un mode de régulation de type A-ISA, alors le procédé se met automatiquement en œuvre à la suite d'une détection de panneau de limitation de vitesse. Dans ce mode automatique et pour ne pas surprendre le conducteur qui perçoit une décélération sans cause apparente visible dans un premier temps, le procédé commande la diffusion d'une information dès le début de la manœuvre par le biais d'un moyen de diffusion d'information du véhicule, apte à informer le conducteur que la régulation est activée.

On définit ci-après les contraintes de confort utilisées par le procédé selon l'invention pour retenir le profil de décélération souhaité.

Une première contrainte de confort retenue par le procédé selon l'invention, est définie à partir d'une relation linéaire entre la décélération maximale admissible/ décélération minimale admissible et l'instant de l'acquittement t = 5 s après la proposition d'acquittement t = 0 s. La décélération maximale admise s'exprime par l'équation suivante :

$$\text{Décélération maximale admissible } = -\frac{1}{5} * t - \frac{1}{2}$$

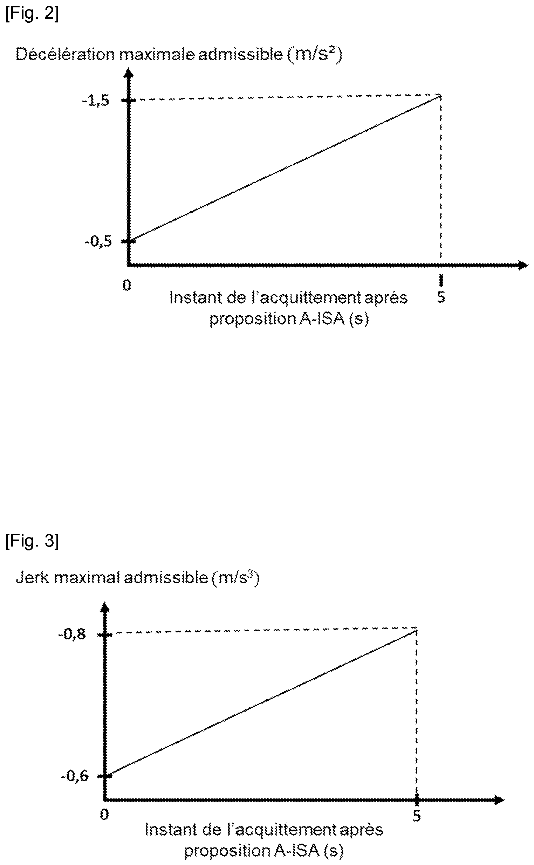

Cette relation linéaire entre la décélération, exprimée en m/s$^2$, et l'instant d'acquittement, exprimé en seconde (s), est représentée graphiquement sur la figure 2.

Une deuxième contrainte de confort retenue par le procédé selon l'invention, est définie à partir d'une relation linéaire entre le Jerk maximal admissible/ Jerk minimal admissible et l'instant de l'acquittement t = 5 s après la proposition d'acquittement t = 0 s. Le Jerk maximal admissible s'exprime par l'équation suivante :

$$\text{Jerk maximal admissible } = -\frac{0,2}{5} * t - 0,6$$

Cette relation linéaire entre le Jerk, exprimé en m/s$^3$, et l'instant d'acquittement, exprimé en seconde (s), est représentée graphiquement sur la figure 3.

Les profils de décélération sont construits à partir des équations cinématiques de mouvement du véhicule.

En exploitant ces valeurs directement dans la construction des profils de Jerk, on s'affranchit alors de la dépendance entre l'instant d'acquittement et les notions de décélération maximale admissible et de Jerk maximal admissible.

Pour satisfaire à certaines exigences, notamment en termes de temps de calcul, et optimiser le confort, le procédé considère avantageusement un instant d'acquittement de t = 3,5 s. A partir de cette valeur, le procédé calcule la décélération maximale admissible et le Jerk maximal admissible les plus confortables à partir des équations précédentes :

$$\text{Décélération max admissible la plus confortable} = -\frac{1}{5} * 3,5 - \frac{1}{2} = -1,2 \ m/s^2$$

$$\text{Jerk max admissible le plus confortable } = -\frac{0,2}{5} * 3,5 - 0,6 = -0,74 \ m/s^3$$

L'équation retenue pour exprimer la position longitudinale *P(t)* du véhicule s'écrit sous la forme d'un polynôme du 5ème ordre :

$$P(t) = C_5 * t^5 + C_4 * t^5 + C_3 * t^3 + C_2 * t^2 + C_1 * t + C_0$$

Et par la dérivée de la position *P(t)* par rapport au temps *V(t),* on obtient l'équation de la vitesse longitudinale :

$$V(t) = 5 * C_5 * t^4 + 4 * C_4 * t^3 + 3 * C_3 * t^2 + 2 * C_2 * t + C_1$$

On dérive la vitesse *V(t)* par rapport au temps pour avoir l'équation de l'accélération longitudinale *A(t)* :

$$A(t) = 20 * C_5 * t^3 + 12 * C_4 * t^2 + 9 * C_3 * t + 2 * C_2$$

Et finalement, on dérive l'équation de l'accélération *A(t)* par rapport au temps pour obtenir l'équation du Jerk longitudinale *J(t)* :

$$J(t) = 60 * C_5 * t^2 + 24 * C_4 * t + 6 * C_3$$

Les coefficients $C_5$, $C_4$, $C_3$, $C_2$, $C_1$, $C_0$ sont déterminés en fonction de contraintes définies à t=0 et à t= fin de manœuvre.

Ils sont calculés à partir des équations suivantes :

$$C_0 = 0$$

$$C_1 = V_{init} = \text{\textit{Vitesse initiale}} \text{ à } t = 0$$

$$C_2 = \frac{A_{init}}{2} \text{ \textit{avec} } A_{init} : \text{\textit{Accélération initiale}} \text{ à } t = 0$$

$$C_3 = \frac{J_{init}}{6} \text{ \textit{avec} } J_{init} : \text{\textit{Jerk initiale}} \text{ à } t = 0$$

$$C_4 = \frac{(V_{consigne} - V_{init}) - \frac{(A_{consigne} - A_{init})}{4} * D_m - \frac{J_{init}}{4} * D_m^2 - A_{init} * D_m}{D_m^3} \text{ avec } V_{consigne} = \text{vitesse limitée}$$

$$C_5 = \frac{-3*(V_{consigne} - V_{init}) + (A_{consigne} - A_{init})*D_m + \frac{J_{init}}{2}*D_m^2 + 3*A_{init}*D_m}{5*D_m^4}$$

avec $D_m$ = durée de la manœuvre entre t = 0 et t = fin de manœuvre.

Les équations précédentes sont implémentées à partir d'un programme réalisé, par exemple, avec MATLAB™.

MATLAB™, acronyme pour « matrix laboratory » est un langage émulé par un environnement du même nom ; il est utilisé à des fins de calcul numérique. Développé par la société MathWorks, MATLAB™ permet de manipuler des matrices, d'afficher des courbes et des données, de mettre en œuvre des algorithmes, de créer des interfaces utilisateurs, et peut s'interfacer avec d'autres langages comme le C, C++, Java et Fortran.

Le script de ce programme est donné ci-dessous à titre d'exemple :

```
for Dm=0:0.1:100
t = 0:0.01:Dm;
C4 =((Vcons-Vego)- (Jerk_max/4)*Dm^(2) - A0*Dm)/(Dm^(3));

C5 =(-3*(Vcons-Vego)+(Jerk_max*Dm^(2))/2+3*A0*Dm)/(5*Dm^(4));
pos_eq = [C5 C4 C3 C2 C1 C0];
speed_eq = [5*C5 4*C4 3*C3 2*C2 C1];
accel_eq = [20*C5 12*C4 6*C3 2*C2];
jerk_eq = [60*C5 24*C4 6*C3];
speed_cons = polyval(speed_eq,Dm);
accel_cons = polyval(accel_eq,Dm);
A_maxi = max(abs(polyval(accel_eq,t)));
J_maxi = max(abs(polyval(jerk_eq,t)));
if abs(A_maxi) <= Accel_max & abs(J_maxi) <= Jerk_max
Prop_time = T;
break
end
end
```

Dans le script ci-dessus, le programme essaie plusieurs durées de manœuvre $D_m$ et contrôle si les différents profils de déclaration vérifient les contraintes de décélération/Jerk maximaux admissibles. Le programme garde la plus

petite durée $D_m$ durant laquelle on peut effectuer une décélération avec les contraintes déjà explicitées.

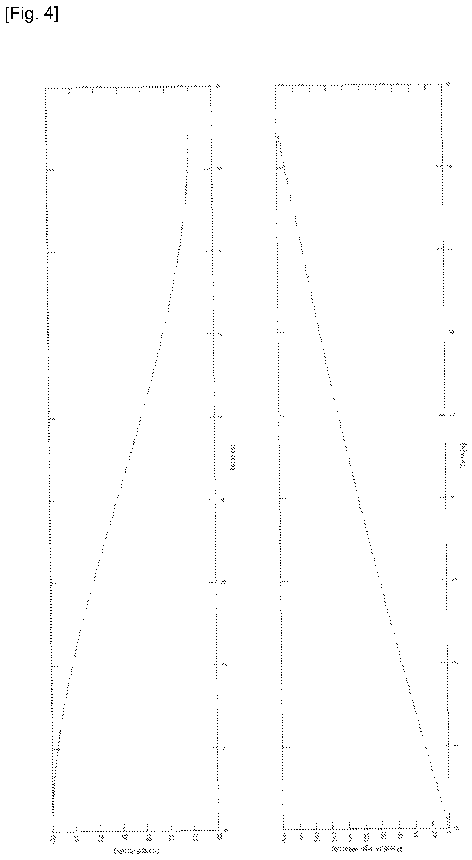

La figure 4 illustre graphiquement un premier scénario de profil de décélération retenu avec la durée $D_m$ la plus courte, construit avec les données suivantes : le véhicule roule à une vitesse de 100 km/h $(V_{init})$ et un panneau de limitation de vitesse à 70 km/h $(V_{consigne})$ est détecté à 2 km devant lui.

La courbe du haut représente la vitesse V du véhicule (Speed) exprimée en km/h en fonction du temps t, exprimé en secondes (s), et la courbe du bas représente la position P du véhicule (Position ego véhicule), exprimée en mètres (m) en fonction du temps t (Time), exprimé en secondes (s), pour la même durée $D_m$.

A partir de la courbe du haut, on observe que pour passer d'une vitesse de 100 km/h à une vitesse de 70 km/h, il faut une durée $D_m$ de 8 s. En reportant cette durée sur la courbe du bas, on obtient graphiquement la position du véhicule à la fin de la décélération (manœuvre) soit 198,02 m.

On sait donc que pour passer de 100 km/h à 70km/h, il faudra une distance de 198,02 m (avec une décélération maximale admissible < 1,2 et un Jerk maximal admissible < 0,74)

Cette distance, ramenée à hauteur du panneau de limitation de vitesse, permet de déterminer l'instant d'acquittement et donc l'instant de commande de l'activation de la régulation de vitesse longitudinale A-ISA. Ainsi, quand le véhicule arrivera à 198,02 m du panneau de limitation de vitesse, la régulation A-ISA sera activée et le véhicule arrivera à hauteur du panneau de limitation de vitesse avec la bonne vitesse (70 km/h).

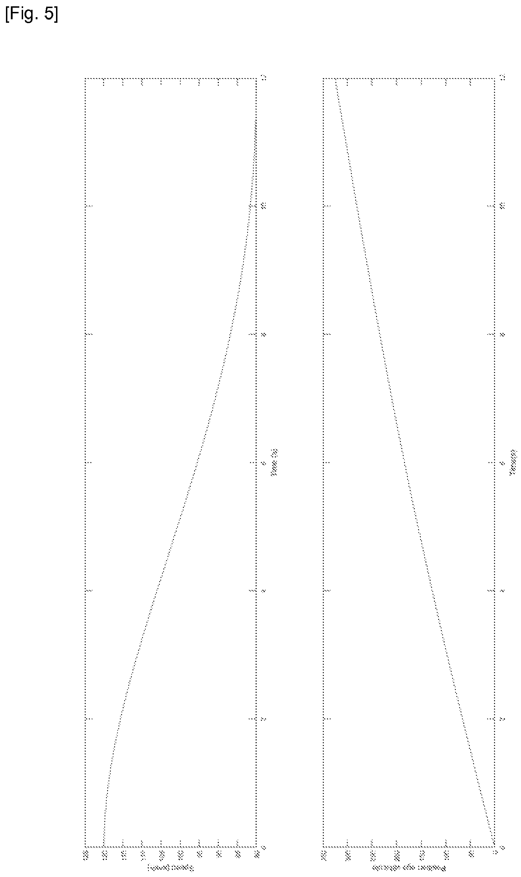

La figure 5 illustre graphiquement un deuxième scénario de profil de décélération retenu avec la durée $D_m$ la plus courte, reprenant le mêmes type de courbes mais avec les données suivantes : le véhicule roule à une vitesse de 120 km/h $(V_{init})$ et un panneau de limitation de vitesse à 80 km/h $(V_{consigne})$ est détecté à 2 Km devant lui.

A partir de la courbe du haut, on observe que pour passer d'une vitesse de 120 km/h à une vitesse de 80 km/h, il faut une durée de 10 secondes. En reportant cette durée sur la courbe du bas, on obtient graphiquement la position du véhicule à la fin de la décélération soit 325,35 m.

On sait donc que pour effectuer ce profil de décélération entre 120 km/h et 80km/h, il faudra une distance de 325,35 m (avec une décélération maximale admissible < 1,2 et un Jerk maximal admissible < 0,74)

Ainsi, quand le véhicule arrivera à 325,35 m du panneau de limitation de vitesse, la régulation A-ISA sera activée et le véhicule arrivera à hauteur du panneau de limitation de vitesse avec la bonne vitesse (80 Km/h).

Le procédé implémente un produit programme d'ordinateur comportant des instructions pour l'exécution des étapes du procédé décrit ci-dessus.

Ce programme est implémenté par exemple par un ou plusieurs calculateurs (ou processeurs) du système ADAS (superviseur ADAS) du véhicule en lien avec un ou plusieurs calculateurs (ou processeurs) du système IVI (In-Vehicle Infotainment) qui est l'organe central du véhicule dédié au traitement des données et à la communication avec le conducteur.

Un tel programme pourra être mis à jour avec possibilité d'ajout de fonctions en utilisant une mise à jour par voie d'ondes de type OTA « Over The Air ».

## Revendications

1. Procédé de détermination de l'instant d'activation de la régulation de la vitesse longitudinale d'un véhicule automobile, à la suite de la détection (100) d'un début de zone de limitation de vitesse se trouvant à une position déterminée devant le véhicule, sur la trajectoire dudit véhicule, ledit procédé consistant à déterminer (200) la position du début de cette zone par rapport au véhicule et l'information de vitesse limitée de ladite zone et si la différence de vitesse entre la vitesse courante du véhicule et l'information de vitesse limitée est supérieure à un seuil déterminé (300), à construire (400) plusieurs profils de décélération pour différents instants d'acquittement de la vitesse limitée entre un instant de proposition d'acquittement (t = 0) et un instant d'acquittement maximal déterminé, amenant la vitesse du véhicule à celle de la vitesse limitée en prenant en compte la position longitudinale, la vitesse longitudinale, l'accélération longitudinale et le Jerk longitudinal du véhicule, à identifier et retenir (500) parmi ces profils, un profil de décélération déterminé répondant à des contraintes de confort déterminées, avec la durée de décélération la plus courte (Dm), et à partir du profil retenu, à déterminer (600) la distance séparant les positions du véhicule entre le début et la fin de ladite durée (Dm), et à commander (700) l'activation de la régulation de vitesse longitudinale du véhicule quand le véhicule arrive à ladite distance du début de la zone de limitation de vitesse,

   procédé dans lequel les contraintes de confort sont basées sur une valeur de décélération déterminée comprise entre des valeurs minimale et maximale admissibles déterminées et sur une valeur de Jerk déterminée comprise entre des valeurs minimale et maximale admissibles déterminées ; les valeurs de décélération et de jerk déterminées étant considérées sur une durée maximale déterminée comprise entre l'instant de proposition d'acquittement et l'instant maximal d'acquittement,
   ledit procédé consistant à considérer une relation linéaire entre les valeurs de décélération maximale et minimale

**EP 4 476 110 B1**

et l'instant d'acquittement après l'instant de proposition de l'acquittement et une relation linéaire entre les valeurs de Jerk maximale et minimale et l'instant maximal d'acquittement déterminé après l'instant de proposition d'acquittement.

2. Procédé selon la revendication précédente dans lequel la relation linéaire entre les valeurs de décélération maximale et minimale et l'instant d'acquittement après l'instant de proposition de l'acquittement s'exprime par l'équation suivante : $Décélération\ maximale\ admissible = -\frac{1}{5} * t - \frac{1}{2}$, la relation linéaire entre les valeurs de Jerk maximale et minimale et l'instant d'acquittement après l'instant de proposition de l'acquittement s'exprime par l'équation suivante : $Jerk\ maximal\ admissible = -\frac{0,2}{5} * t - 0,6$ .

3. Procédé selon la revendication précédente, dans lequel un instant d'acquittement après la proposition d'acquittement à *t = 0,* permettant de construire les profils de décélération remplissant les contraintes de confort, est choisi à *t = 3,5 secondes.*

4. Procédé selon l'une des revendications précédentes, dans lequel les profils de décélération sont construits à partir d'équations cinématiques de mouvement du véhicule : La position longitudinale *P(t)* du véhicule s'exprimant sous la forme d'un polynôme du 5$^{ième}$ ordre : $P(t) = C_5 * t^5 + C_4 * t^5 + C_3 * t^3 + C_2 * t^2 + C_1 * t + C_0$ ; la vitesse longitudinale *V(t)* s'exprimant comme la dérivée de la position longitudinale par rapport au temps $P(t) : V(t) = 5 * C_5 * t^4 + 4 * C_4 * t^3 + 3 * C_3 * t^2 + 2 * C_2 * t + C_1$ ; l'accélération longitudinale *A(t)* s'exprimant comme la dérivée de la vitesse par rapport au temps *V(t) :* $A(t) = 20 * C_5 * t^3 + 12 * C_4 * t^2 + 9 * C_3 * t + 2 * C_2$ ; le Jerk *J(t)* s'exprimant comme la dérivée de l'accélération par rapport au temps *A(t) :* $J(t) = 60 * C_5 * t^2 + 24 * C_4 * t + 6 * C_3$ et dans lequel $C_0, C_1, C_2, C_3, C_4, C_5$ sont des coefficients déterminés à partir de contraintes définies au début et à la fin des durées des profils de décélération.

5. Procédé selon l'une des revendications précédentes, consistant à acquitter automatiquement la commande de régulation quand le type de voie de circulation choisi le permet.

6. Produit programme d'ordinateur comportant des instructions qui, lorsque le programme est exécuté par un ordinateur, conduisent celui-ci à mettre en œuvre les étapes du procédé selon l'une des revendications 1 à 5.

7. Véhicule automobile comportant un régulateur de vitesse adaptatif ; mettant en œuvre le procédé selon l'une quelconque de de revendications 1 à 5.

8. Véhicule selon la revendication précédente, comportant en outre un moyen de diffusion d'information apte à informer le conducteur du véhicule que la régulation de la vitesse longitudinale du véhicule est activée.

**Patentansprüche**

1. Verfahren zum Bestimmen des Aktivierungszeitpunkts der Längsgeschwindigkeitsregelung eines Kraftfahrzeugs nach dem Erfassen (100) eines Beginns eines Geschwindigkeitsbegrenzungsbereichs, der sich an einer bestimmten Position vor dem Fahrzeug auf der Bahn des Kraftfahrzeugs befindet, wobei das Verfahren das Bestimmen (200) der Position des Beginns dieses Bereichs in Bezug auf das Fahrzeug und der Information über die begrenzte Geschwindigkeit des Bereichs umfasst, und wenn die Geschwindigkeitsdifferenz zwischen der aktuellen Fahrzeuggeschwindigkeit und der Information über die begrenzte Geschwindigkeit größer als ein bestimmter Schwellenwert (300) ist, das Konstruieren (400) mehrerer Verzögerungsprofile für unterschiedliche Zeitpunkte zur Bestätigung der begrenzten Geschwindigkeit zwischen einem Zeitpunkt der Quittierungsvorlage (t = 0) und einem bestimmten maximalen Quittierungszeitpunkt, der die Fahrzeuggeschwindigkeit unter Berücksichtigung der Längsposition, der Längsgeschwindigkeit, der Längsbeschleunigung und des Längskegels des Fahrzeugs auf die Geschwindigkeit der begrenzten Geschwindigkeit bringt, unter diesen Profilen ein bestimmtes Verzögerungsprofil zu ermitteln und zu halten (500), das bestimmten Komfortbedingungen mit der kürzesten Verzögerungszeit (Dm) entspricht, und aus dem gewählten Profil den Abstand zwischen den Positionen des Fahrzeugs von Anfang bis zum zu bestimmen (600) am Ende der Zeitdauer (Dm) die Aktivierung der Längsgeschwindigkeitsregelung des Fahrzeugs zu steuern (700), wenn das Fahrzeug in der genannten Entfernung vom Beginn des Geschwindigkeitsbegrenzungsbereichs ankommt,

Verfahren, bei dem die Komfortbeanspruchungen auf einem bestimmten Verzögerungswert zwischen bestimmten zulässigen Minimal- und Maximalwerten und einem bestimmten Jerk-Wert zwischen bestimmten zulässigen Minimal- und Maximalwerten beruhen; die bestimmten Verzögerungs- und Jerk-Werte werden über eine bestimmte maximale Zeitspanne zwischen dem Zeitpunkt des Quittierungsvorschlags und dem maximalen Quittierungszeitpunkt betrachtet;

Dabei wird eine lineare Beziehung zwischen dem maximalen und minimalen Verzögerungswert und dem Entrichtungszeitpunkt nach dem Zeitpunkt des Freispruchs und eine lineare Beziehung zwischen dem maximalen und minimalen Jerk-Wert und dem nach dem Zeitpunkt des Freispruchs bestimmten maximalen Entrichtungszeitpunkt berücksichtigt.

2. Verfahren nach dem vorhergehenden Anspruch, bei dem die lineare Beziehung zwischen dem maximalen und minimalen Verzögerungswert und dem Quittierungszeitpunkt nach dem Quittierungsvorschlagszeitpunkt durch die folgende Gleichung ausgedrückt wird: maximal zulässige Verzögerung =-1/5*t-1/2 , wobei die lineare Beziehung zwischen dem maximalen und minimalen Jerk-Wert und dem Quittierungszeitpunkt nach dem Quittierungsvorschlagszeitpunkt durch die folgende Gleichung ausgedrückt wird: maximal zulässiger Jerk =-(0,2)/5*t-0,6 .

3. Verfahren nach dem vorhergehenden Anspruch, bei dem ein Bestätigungszeitpunkt nach dem Bestätigungsvorschlag bei t=0, der es ermöglicht, die Verzögerungsprofile zu konstruieren, die die Komfortbedingungen erfüllen, bei t=3,5 Sekunden gewählt wird.

4. Verfahren nach einem der vorhergehenden Ansprüche, bei dem die Verzögerungsprofile aus ki nematischen Gleichungen der Fahrzeugbewegung konstruiert sind: die Längsposition P(t) des Fahrzeugs, die sich als ein Polynom der fünften Ordnung ausdrückt: $P(t) = C_5 * t^5 + C_4 * t^5 + C_3 * t^3 + C_2 * t^2 + C_1 * t + C_0$ ; die Längsgeschwindigkeit V(t) sich als Ableitung von der Längsposition in Bezug auf die Zeit P( t) ausdrückt: : $V(t) = 5 * C_5 * t^4 + 4 * C_4 * t^3 + 3 * C_3 * t^2 + 2 * C_2 * t + C_1$ ; Längsbeschleunigung A(t) als Ableitung der Geschwindigkeit vom Zeitpunkt V(t): $A(t) = 20 * C_5 * t^3 + 12 * C_4 * t^2 + 9 * C_3 * t + 2 * C_2$ ; Jerk J(t) als Ableitung der Beschleunigung vom Zeitpunkt A(t)): $J(t) = 60 * C_5 * t^2 + 24 * C_4 * t + 6 * C_3$ und wobei $C_0, C_1, C_2, C_3, C_4, C_5$ Koeffizienten sind, die aus den zu Beginn und am Ende der Dauer der Verzögerungsprofile definierten Spannungen bestimmt werden.

5. Verfahren nach einem der vorhergehenden Ansprüche, das darin besteht, den Steuerbefehl automatisch zu erfüllen, wenn der gewählte Fahrspurtyp dies zulässt.

6. Computerprogrammprodukt mit Befehlen, die, wenn das Programm von einem Computer ausgeführt wird, diesen veranlassen, die Schritte des Verfahrens nach einem der Ansprüche 1 bis 5 auszuführen.

7. Kraftfahrzeug mit einem adaptiven Geschwindigkeitsregler; welches das Verfahren nach einem der Ansprüche 1 bis 5 ausführt.

8. Fahrzeug nach dem vorhergehenden Anspruch, das ferner eine Informationsverbreitungseinrichtung umfasst, die den Fahrzeugführer darüber informieren kann, dass die Regelung der Längsgeschwindigkeit des Fahrzeugs aktiviert ist.

**Claims**

1. A method for determining the moment of activation of the longitudinal speed control of a motor vehicle, following the detection (100) of a speed limitation zone beginning at a determined position in front of the motor vehicle, on the trajectory of said motor vehicle, said method comprising determining (200) the position of the beginning of said zone by report to the motor vehicle and the speed limitation information of said threshold and if the speed difference between the current speed of the motor vehicle and the speed limitation information is greater than a determined profile (300), to be constructed (400) several positions deceleration zones for different instants of acknowledgement of the speed limit between a proposed acknowledgement instant (t = 0) and a determined maximum acknowledgement instant, bringing the speed of the vehicle to that of the speed limit by taking into account the longitudinal in, the longitudinal speed, the longitudinal acceleration and the longitudinal Jerk of the vehicle, to identify and retain (500) these profiles, a determined deceleration profile corresponding to determined comfort constraints, with the shortest deceleration time (Dm), and from the profile retained, to determine (600) the distance separating the positions of the vehicle between the beginning and the end of said period, and ordering (700) the activation of the longitudinal speed control of the vehicle when the vehicle arrives at said distance from the beginning of the speed limitation zone,

method in which the comfort constraints are based on a determined deceleration value between determined minimum and maximum permissible values and on a determined Jerk value between determined minimum and maximum permissible values; the determined deceleration and jerk values being considered over a determined maximum period between the proposed acknowledgement time and the maximum acknowledgement time, that method consisting in considering a linear relationship between the maximum and minimum deceleration values and the acknowledgement instant after the acknowledgement proposal instant and a linear relationship between the maximum and minimum Jerk values and the maximum acknowledgement instant determined after the acknowledgement proposal instant.

2. Method according to the previous claim, wherein the linear relationship between the maximum and minimum deceleration values and the acknowledgement time after the acknowledgement suggestion time is expressed by the following equation: Maximum permissible deceleration =-1/5*t-1/2 , the linear relationship between the maximum and minimum Jerk values and the acknowledgement time after the acknowledgement suggestion time is expressed by the following equation: Maximum permissible Jerk =-(0,2)/5*t-0,6 .

3. Method according to the previous claim, wherein an acknowledgement instant after the acknowledgement suggestion at t=0, making it possible to construct the deceleration profiles filling the comfort constraints, is chosen at t=3.5 seconds.

4. Method according to one of the previous claims, in which the deceleration profiles are constructed from kinematic equations of vehicle motion: the longitudinal position P(t) of the vehicle expressed as a polynomial of the 5th order: $P(t) = C_5 * t^5 + C_4 * t^5 + C_3 * t^2 + C_2 * t^2 + C_1 * t + C_0$ ; the longitudinal speed V(t) expressed as the derivative of the longitudinal position by report at time P(t): $V(t) = 5 * C_5 * t^4 + 4 * C_4 * t^3 + 3 * C_3 * t^2 + 2 * C_2 * t + C_1$ ; the longitudinal acceleration A(t) is the derivative of the report speed at time V(t): $A(t) = 20 * C_5 * t^3 + 12 * C_4 * t^2 + 9 * C_3 * t + 2 * C_2$ ;

the Jerk J(t) is the derivative of the report acceleration at time A(t): $J(t) = 60 * C_5 * t^2 + 24 * C_4 * t + 6 * C_3$ and in which $C_0$, $C_1, C_2, C_3, C_4, C_5$ are coefficients determined from constraints defined at the beginning and at the end of the durations of deceleration profiles.

5. Method according to one of the previous claims, consisting in automatically paying the regulating order when the type of taxiway chosen so permits.

6. Computer plan product comprising instructions which, when the plan is executed by a computer, lead the latter to implement the steps of the method according to one of claims 1 to 5.

7. Motor vehicle comprising an adaptive cruise control; implementing the method according to any one of claims 1 to 5.

8. A vehicle according to the previous claim, further comprising an information diffusion means adapted to inform the driver of the vehicle that the regulation of the longitudinal speed of the vehicle is activated.

[Fig. 1]

[Fig. 2]

Décélération maximale admissible (m/s²)

-1,5

-0,5

0

Instant de l'acquittement après
proposition A-ISA (s)

5

[Fig. 3]

Jerk maximal admissible (m/s³)

-0,8

-0,6

0

Instant de l'acquittement après
proposition A-ISA (s)

5

[Fig. 4]

[Fig. 5]

## RÉFÉRENCES CITÉES DANS LA DESCRIPTION

**Documents brevets cités dans la description**

- FR 2201083
- DE 102014215673
- EP 2712781 A